# EUROPEAN PATENT APPLICATION

(11) **EP 4 434 675 A1**
(43) Date of publication of application: **25.09.2024**
(21) Application number: 24164348.5
(22) Date of filing: 19.03.2024
(51) Int. Cl.: B24B 9/14, B24B 13/005, B24B 41/00, B24B 41/06, B24B 49/04

(54) **EYEGLASSES LENS PROCESSING SYSTEM AND CONTROL PROGRAM OF THE EYEGLASSES LENS PROCESSING SYSTEM**

(30) Priority: 24.03.2023 JP 2023048082
(71) Applicant: NIDEK CO., LTD., Gamagori, Aichi (JP)
(72) Inventor: KAWAGIWA, Toshimasa, Gamagori, Aichi (JP)
(74) Representative: Hoefer & Partner Patentanwälte mbB

(57) **Abstract**

An eyeglasses lens processing system includes the transport robot that holds an eyeglasses lens in a holding portion to transport the eyeglasses lens, an eyeglasses lens processing device that processes the eyeglasses lens held between a pair of the lens holding shafts, a shape information acquisition unit that acquires information about a refractive surface shape of the eyeglasses lens, and a relative movement unit that changes a relative positional relationship between the eyeglasses lens held by the holding portion of the transport robot and the pair of lens holding shafts. The relative movement unit at least two-dimensionally changes the relative positional relationship, based on acquired information of the refractive surface shape, to insert the eyeglasses lens into a predetermined insertion position in a gap between the pair of lens holding shafts.

## Description

### TECHNICAL FIELD

The present disclosure relates to an eyeglasses lens processing system that processes a peripheral edge of an eyeglasses lens by using an eyeglasses lens processing device, and a control program of the eyeglasses lens processing system.

### BACKGROUND ART

A technique has been proposed in which a transport robot for holding the eyeglasses lens and transporting the eyeglasses lens to an eyeglasses lens processing device is used to automate processing of a peripheral edge of the eyeglasses lens (for example, refer to JP2021-058948A). In addition, in an eyeglasses lens processing device, a lens is generally inserted into a gap between a pair of lens holding shafts, and thereafter, the lens holding shafts are moved to a lens pressing side. In this manner, the eyeglasses lens is held by the lens holding shafts, and the peripheral edge of the eyeglasses lens held by the lens holding shafts is processed by a processing tool (for example, refer to JP2016-190287A).

Incidentally, when the eyeglasses lens is transported by the transport robot and the eyeglasses lens is inserted into the gap between the pair of lens holding shafts in order that the eyeglasses lens is held by the pair of lens holding shafts provided in the eyeglasses lens processing device, it has been found that the eyeglasses lens interferes with the lens holding shafts depending on a shape of the eyeglasses lens.

### SUMMARY OF INVENTION

A technical object of the present disclosure is to provide an eyeglasses lens processing system and a control program of the eyeglasses lens processing system, which enable lens holding shafts to properly hold an eyeglasses lens when a transport robot transports the eyeglasses lens to insert the eyeglasses lens into a gap between the lens holding shafts.
(1) An eyeglasses lens processing system including:
   a transport robot configured to hold an eyeglasses lens in a holding portion to transport the eyeglasses lens;
   an eyeglasses lens processing device configured to process the eyeglasses lens held between a pair of lens holding shafts;
   a shape information acquisition unit configured to acquire information about a refractive surface shape of the eyeglasses lens; and
   a relative movement unit configured to change a relative positional relationship between the eyeglasses lens held by the holding portion of the transport robot and the pair of lens holding shafts, in which the relative movement unit at least two-dimensionally changes the relative positional relationship, based on acquired information of the refractive surface shape, to insert the eyeglasses lens into a predetermined insertion position in a gap between the pair of lens holding shafts.
(2) The eyeglasses lens processing system according to the above-described (1),
   in which the relative movement unit at least two-dimensionally changes a position of the eyeglasses lens based on a positional relationship of a refractive surface of the eyeglasses lens with respect to positions of the pair of lens holding shafts, and
   the positional relationship of the refractive surface is obtained based on the information about the refractive surface shape acquired by the shape information acquisition unit.
(3) The eyeglasses lens processing system according to the above-described (1) or (2),
   in which the pair of lens holding shafts include:
   a first holding shaft (202L) that holds a front refractive surface side of the eyeglasses lens; and
   a second holding shaft (202R) that holds a rear refractive surface side of the eyeglasses lens, and the relative movement unit two-dimensionally changes the position of the eyeglasses lens such that a refractive surface of the eyeglasses lens held by the holding portion of the transport robot passes through a predetermined point or a predetermined region determined with regard to at least one position of the first holding shaft and the second holding shaft, to insert the eyeglasses lens into the predetermined insertion position.
(4) The eyeglasses lens processing system according to the above-described (3),
   in which the shape information acquisition unit acquires at least one shape of a front refractive surface and a rear refractive surface of the eyeglasses lens,
   the relative movement unit inserts the eyeglasses lens into the predetermined insertion position by performing any one control of:
      (a) a first control for two-dimensionally changing the position of the eyeglasses lens such that the front refractive surface passes through a predetermined first point (HF1) determined with regard to a position of the first holding shaft;
      (b) a second control for two-dimensionally changing the position of the eyeglasses lens such that the rear refractive surface passes through a predetermined second point (HR1) determined with regard to a position of the second holding shaft;
      (c) a third control for two-dimensionally changing the position of the eyeglasses lens such that an intermediate section between the front refractive surface and the rear refractive surface passes through a predetermined third point (HCl) set in an intermediate portion between the first holding shaft and the second holding shaft; and
      (d) a fourth control for two-dimensionally changing the position of the eyeglasses lens such that both the front refractive surface and the rear refractive surface pass through a predetermined region (AE) set between the first holding shaft and the second holding shaft.
(5) The eyeglasses lens processing system according to the above-described (3) or (4),
   in which the relative movement unit tilts a refractive surface of the eyeglasses lens with respect to a direction perpendicular to an axial direction of the lens holding shafts, before inserting the eyeglasses lens into the gap between the pair of lens holding shafts.
(6) The eyeglasses lens processing system according to any one of the above-described (3) to (5),
   in which before inserting the eyeglasses lens into the gap between the pair of lens holding shafts, the relative movement unit tilts the eyeglasses lens such that an end portion (LrE) of the rear refractive surface which is located on a side farther from the second holding shaft is closer to the second holding shaft, and changes the position of the eyeglasses lens such that the tilting is returned as the eyeglasses lens moves in an insertion direction perpendicular to the lens holding shaft.
(7) The eyeglasses lens processing system according to any one of the above-described (3) to (6),
   in which the shape information acquisition unit acquires outer shape information of a cup (CU) of a processing jig fixed to a front refractive surface of the eyeglasses lens, and
   the relative movement unit inserts the eyeglasses lens into the gap between the first holding shaft and the second holding shaft until the eyeglasses lens reaches a position where the cup is not in contact with the first holding shaft, based on the outer shape information, and thereafter moves the eyeglasses lens to an insertable position of the cup in an axial direction of the lens holding shaft to insert the eyeglasses lens into the predetermined insertion position.
(8) The eyeglasses lens processing system according to any one of the above-described (1) to (7),
   in which the shape information acquisition unit acquires a lens distance in an axial direction of the lens holding shafts from an end portion of a cup of a processing jig fixed to a front refractive surface of the eyeglasses lens to an end portion of a rear refractive surface of the eyeglasses lens, and
   the relative movement unit determines whether or not the lens distance is smaller than a gap interval between the pair of lens holding shafts, and when determining that the lens distance is smaller than the gap, the relative movement unit inserts the eyeglasses lens into the predetermined insertion position without performing control for two-dimensionally moving the eyeglasses lens based on the refractive surface shape.
(9) A control program of an eyeglasses lens processing system including a transport robot configured to hold an eyeglasses lens in a holding portion to transport the eyeglasses lens, an eyeglasses lens processing device configured to process the eyeglasses lens held between a pair of lens holding shafts, a shape information acquisition unit configured to acquire information about a refractive surface shape of the eyeglasses lens, a relative movement unit configured to change a relative positional relationship between the eyeglasses lens held by the holding portion of the transport robot and the pair of lens holding shafts, and a controller, the control program having instructions which, when executed by the controller, cause the eyeglasses lens processing system to perform:
   a control step for controlling the relative movement unit, in which the eyeglasses lens is inserted into a predetermined insertion position in a gap between the pair of lens holding shafts by at least two-dimensionally changing the relative positional relationship based on acquired information about the refractive surface shape.

### BRIEF DESCRIPTION OF DRAWINGS

Exemplary embodiment(s) of the present invention will be described in detail based on the following figures, wherein:
FIG. 1 is a view illustrating an eyeglasses lens processing system according to an example;
FIG. 2 is a view illustrating an example of a transport robot;
FIG. 3 is a view illustrating an example of a holding portion provided in the transport robot;
FIG. 4 is a view illustrating another example of the holding portion provided in the transport robot;
FIG. 5 is a view illustrating a lens shape measurement mechanism provided in a lens shape measurement device;
FIG. 6 is a view illustrating a schematic configuration of an eyeglasses lens processing device;
FIG. 7 is a view illustrating a configuration of a control system of a whole eyeglasses lens processing system;
FIG. 8 is a view illustrating a state where an adhesive tape adheres to a cup;
FIG. 9 is a view illustrating a direction in which an eyeglasses lens enters into a gap between lens holding shafts by the transport robot;
FIGS. 10A and 10B are views illustrating normal lens movement with respect to the lens holding shaft;
FIG. 11 is a view illustrating a relationship between a maximum lens distance on the eyeglasses lens side and a gap interval between a pair of the lens holding shafts;
FIG. 12 is a view illustrating lens movement in a case of a lens front surface reference;
FIG. 13 is a view illustrating an example of calculation of a movement trajectory in the lens front surface reference;
FIG. 14 is a view illustrating lens movement in a case of lens rear surface reference;
FIG. 15 is a view illustrating lens movement based on both front refractive surface information and rear refractive surface information of the eyeglasses lens;
FIG. 16 is a view illustrating a modification example of the lens movement based on a refractive surface shape of the eyeglasses lens; and
FIG. 17 is a view illustrating another modification example of the lens movement based on the refractive surface shape of the eyeglasses lens.

### DESCRIPTION OF EMBODIMENTS

### [Overview]

Hereinafter, one typical embodiment will be described with reference to the drawings. Items classified by < > below can be used independently or in association with each other.

For example, an eyeglasses lens processing system (for example, an eyeglasses lens processing system 1) includes a transport robot (for example, a transport robot 100), an eyeglasses lens processing device (for example, an eyeglasses lens processing device 200), a shape information acquisition unit (for example, a lens shape measurement device 300, a control device 50, and a control unit 110), and a relative movement unit (for example, the transport robot 100, a movement unit 250, the control unit 110, a control unit 210, and the control device 50). For example, the eyeglasses lens processing system may include a controller (for example, the control unit 110, the control unit 210, and the control device 50). For example, the eyeglasses lens processing system may include a controller (for example, the control unit 110, the control unit 210, and the control device 50) that executes a control program.

### <Transport Robot>

For example, the transport robot holds an eyeglasses lens in a holding portion (for example, a holding unit 150A and a holding unit 150B). For example, the transport robot moves the eyeglasses lens held by the holding portion. For example, the transport robot includes an arm unit (for example, an arm unit 130). The arm unit has a plurality of joint portions. Then, for example, the transport robot rotates the arm unit via the joint portions to move the eyeglasses lens held by the holding portion. For example, the transport robot may not include the plurality of joint portions, and in a case where an eyeglasses lens LE is transported to the eyeglasses lens processing device, the transport robot may adopt a configuration in which the eyeglasses lens can be at least two-dimensionally moved.

### <Eyeglasses Lens Processing Device>

For example, the eyeglasses lens processing device holds the eyeglasses lens between a pair of lens holding shafts (for example, lens holding shafts 202). For example, the pair of lens holding shafts include a first holding shaft (for example, a lens holding shaft 202L) that holds a front refractive surface side of the eyeglasses lens, and a second holding shaft (for example, a lens holding shaft 202R) that holds a rear refractive surface side of the eyeglasses lens. For example, the first holding shaft includes a cup holder (for example, a cup holder 230) into which a cup of a processing jig fixed to a front refractive surface of the eyeglasses lens is inserted. For example, the second holding shaft includes a lens presser (for example, a lens presser 235). For example, the eyeglasses lens processing device processes a peripheral edge of the eyeglasses lens held by the lens holding shafts by means of a processing tool (for example, a processing tool 260).

### <Shape Information Acquisition Unit>

For example, the shape information acquisition unit acquires refractive surface shape information of the eyeglasses lens. For example, the shape information acquisition unit acquires at least one shape of the front refractive surface and the rear refractive surface of the eyeglasses lens. For example, the shape information acquisition unit may acquire an intermediate curve between the front refractive surface and the rear refractive surface of the eyeglasses lens. For example, the shape information acquisition unit may acquire outer shape information of a cup of a processing jig fixed to the front refractive surface of the eyeglasses lens. For example, the shape information acquisition unit may acquire a lens distance (for example, a maximum lens distance WL) from an end portion of the cup of the processing jig fixed to the front refractive surface of the eyeglasses lens to an end portion of the rear refractive surface of the eyeglasses lens.

For example, the shape information acquisition unit may include a lens shape measurement device (for example, the lens shape measurement device 300). For example, the lens shape measurement device includes a tracing stylus (for example, a tracing stylus 310) that comes into contact with a refractive surface of the eyeglasses lens, and obtains a refractive surface shape of the eyeglasses lens by detecting movement of the tracing stylus. In this case, the lens shape measurement device may include a tracing stylus (for example, a tracing stylus 311) that is brought into contact with the front refractive surface of the eyeglasses lens and a tracing stylus (for example, a tracing stylus 312) that is brought into contact with the rear refractive surface of the eyeglasses lens, and may acquire shapes of the front refractive surface and the rear refractive surface of the eyeglasses lens. In addition, for example, the lens shape measurement device may be a device that optically acquires the refractive surface shape of the eyeglasses lens by using light.

For example, even when the shape information acquisition unit does not include the lens shape measurement device, the refractive surface shape information may be separately acquired by the shape information acquisition unit through communication via an interface. For example, the refractive surface shape information of the eyeglasses lens may be acquired by the shape information acquisition unit in such a manner that design data of a processing target eyeglasses lens is input.

### <Relative Movement Unit and Controller>

For example, the relative movement unit changes a relative positional relationship between the eyeglasses lens held by the holding portion of the transport robot and the pair of lens holding shafts. For example, the relative movement unit at least two-dimensionally changes the relative positional relationship based on the information, which is acquired by the shape information acquisition unit, about the refractive surface shape of the eyeglasses lens, so that the eyeglasses lens is inserted into a predetermined insertion position in a gap between the pair of lens holding shafts. In this manner, when the transport robot transports the eyeglasses lens to insert the eyeglasses lens into the gap between the lens holding shafts, it is possible to cause the lens holding shafts to properly hold the eyeglasses lens. For example, when the eyeglasses lens is inserted into the predetermined insertion position, it is required to recognize positions of the pair of lens holding shafts. For this reason, for example, the relative movement unit may at least two-dimensionally change a position of the eyeglasses lens based on a positional relationship of a refractive surface of the eyeglasses lens with respect to positions of the pair of lens holding shafts. The positional relationship of the refractive surface is obtained based on the refractive surface shape information acquired by the shape information acquisition unit.

For example, the relative movement unit two-dimensionally changes the position of the eyeglasses lens in two directions of a first direction (X-direction) which is an axial direction of the lens holding shafts and a second direction (Y-direction) which is perpendicular to the first axial direction. For example, the predetermined insertion position into which the eyeglasses lens is inserted is a position where a holding center of the eyeglasses lens held by the transport robot coincides with a central axis of the lens holding shaft.

For example, the relative movement unit may insert the eyeglasses lens into the predetermined insertion position by two-dimensionally changing the position of the eyeglasses lens such that the refractive surface of the eyeglasses lens held by the holding portion of the transport robot passes through a predetermined point or a predetermined region determined with regard to at least one position of the first holding shaft and the second holding shaft.

For example, the relative movement unit insert the eyeglasses lens into the predetermined insertion position by performing a first control for two-dimensionally changing the position of the eyeglasses lens such that the front refractive surface passes through a predetermined first point (for example, a point HF1) determined with regard to the position of the first holding shaft. For example, the first point may be determined with regard to an end portion of the first holding shaft. For example, the first point may be set to a position separated from the end portion of the first holding shaft to the second holding shaft side by a constant interference avoidance distance. In addition, in this case, the first point may be set to a point on a side close to the end portion of the first holding shaft in an insertion direction of the eyeglasses lens.

For example, the relative movement unit may insert the eyeglasses lens into the predetermined insertion position by performing a second control for two-dimensionally changing the position of the eyeglasses lens such that the rear refractive surface passes through a predetermined second point (for example, a point HR1) determined with regard to the position of the second holding shaft. For example, the second point may be determined with regard to the end portion of the second holding shaft. For example, the second point may be set to a position separated from the end portion of the second holding shaft to the first holding shaft side by a constant interference avoidance distance. In addition, in this case, the second point may be set to a point on a side far from the end portion of the second holding shaft in the insertion direction of the eyeglasses lens.

For example, the relative movement unit may insert the eyeglasses lens into the predetermined insertion position by performing a third control for two-dimensionally changing the position of the eyeglasses lens such that an intermediate section between the front refractive surface and the rear refractive surface passes through a predetermined third point (for example, a point HCl) set in an intermediate portion (approximately intermediate portion may also be used) between the first holding shaft and the second holding shaft. For example, the third point may be set in the intermediate portion between the end portion of the first holding shaft and the end portion of the second holding shaft. For example, the third point may be set on the central axis of the lens holding shaft. For example, the intermediate shape between the front refractive surface and the rear refractive surface may be acquired by the shape information acquisition unit, based on a front refractive surface shape and a rear refractive surface shape. For example, the intermediate shape may be an intermediate curve in an intermediate portion between a front refractive surface curve and a rear refractive surface curve.

For example, the relative movement unit may insert the eyeglasses lens into the predetermined insertion position by performing a fourth control for two-dimensionally changing the position of the eyeglasses lens such that both the front refractive surface and the rear refractive surface pass through a predetermined region (for example, a region AE) set between the first holding shaft and the second holding shaft. For example, the predetermined region may be set between the end portion of the first holding shaft and the end portion of the second holding shaft. For example, the predetermined region may be set by a position separated from the end portion of the first holding shaft by a constant interference avoidance distance and a position separated from the end portion of the second holding shaft by a constant interference avoidance distance.

For example, the relative movement unit may perform any one of the first control, the second control, the third control, and the fourth control. For example, the relative movement unit may selectively perform any one of the first control, the second control, the third control, and the fourth control. In this case, for example, the relative movement unit may select which control to be performed depending on the refractive surface shape of the eyeglasses lens.

For example, in addition to control for two-dimensionally changing the position of the eyeglasses lens, based on the refractive surface shape of the eyeglasses lens, the relative movement unit may tilt the eyeglasses lens with respect to the second direction (Y-direction) perpendicular to the first direction (X-direction) which is the axial direction of the lens holding shaft. For example, before the eyeglasses lens is inserted into the gap between the pair of lens holding shafts, after the eyeglasses lens is tilted such that the end portion of the rear refractive surface located on the side farther from the second holding shaft is closer to the second holding shaft, the relative movement unit may change the movement of the eyeglasses lens such that the tilting is returned as the eyeglasses lens moves in an insertion direction in the second direction (Y-direction) perpendicular to the lens holding shaft. For example, the relative movement unit may change the movement of the eyeglasses lens such that the tilting of the eyeglasses lens is gradually returned. In this manner, even when the gap between the lens holding shafts is narrow, an applicable range of a lens shape which can be inserted into the predetermined insertion position is widened.

In other words, the tilting of the eyeglasses lens indicates a state where that the central axis (N1) passing through the holding center of the eyeglasses lens held by the holding portion of the transport robot is tilted such that the rear refractive surface side of the central axis (N1) is closer to the lens holding shaft from a positional relationship parallel to the axial direction (X-direction) of the lens holding shaft. In addition, description that the tilting is returned indicates that the central axis (N1) is brought parallel to the axial direction (X-direction) of the lens holding shaft.

For example, the tilting of the eyeglasses lens before being inserted into the gap between the lens holding shafts may be a predetermined angle set in advance, or may be the tilting based on curve information of the refractive surface shape of the eyeglasses lens. For example, in a case of the first control, the tilting of the eyeglasses lens may be set, based on the front refractive surface shape. For example, in a case of the second control, the tilting of the eyeglasses lens may be set, based on the rear refractive surface shape. For example, in a case of the third control, the tilting of the eyeglasses lens may be set, based on the intermediate shape between the front refractive surface and the rear refractive surface. For example, in a case of the fourth control, the tilting of the eyeglasses lens may be set, based on both the front refractive surface and the rear refractive surface.

For example, based on the outer shape information of the cup which is acquired by the shape information acquisition unit, the relative movement unit may insert the eyeglasses lens (for example, a lens portion of the front refractive surface and the rear refractive surface located on the lens holding shaft side from the cup) into the gap between the first holding shaft and the second holding shaft until the eyeglasses lens reaches a position where the cup does not come into contact with the first holding shaft. Thereafter, the relative movement unit may move the eyeglasses lens to an insertable position of the cup with respect to the end portion of the first holding shaft in the axial direction (X-direction) of the lens holding shaft, with respect to the end of the first holding shaft; with this manner, the eyeglasses lens may be inserted into the predetermined insertion position. In this manner, even when the cup is fixed to the lens front refractive surface, it is possible to cause the lens holding shafts to properly hold the eyeglasses lens without a possibility that the cup interferes with the lens holding shaft.

For example, when the lens distance is acquired by the shape information acquisition unit, the relative movement unit may determine whether or not the lens distance is smaller than the gap interval between the pair of lens holding shafts, and when determining that the lens distance is smaller, the relative movement unit may insert the eyeglasses lens into the predetermined insertion position without performing the two-dimensional control for moving the eyeglasses lens which is based on the refractive surface shape. For example, after the end portion of the cup is positioned at a position separated from the end portion on the first holding shaft side by a predetermined distance before the eyeglasses lens is inserted into the gap between the lens holding shafts, the relative movement unit can insert the eyeglasses lens into the predetermined insertion position only by performing the control for moving the eyeglasses lens in the insertion direction (Y-direction). In this manner, it is not necessary to perform the two-dimensional control for moving the eyeglasses lens. Therefore, the lens can be quickly moved to the predetermined insertion position.

For example, the above-described control may be performed by the controller. For example, the above-described control may be provided in the shape information acquisition unit. For example, based on the refractive surface shape, the controller may at least two-dimensionally change the movement of the eyeglasses lens by controlling the driving of the transport robot. For example, the controller may control the eyeglasses lens processing device (for example, the movement unit 250), and may two-dimensionally move the pair of lens holding shafts, based on the refractive surface shape; with this manner, the control unit may and two-dimensionally change the relative positional relationship between the eyeglasses lens and the pair of lens holding shafts. Alternatively, the controller may control the transport robot and the eyeglasses lens processing device, and may at least two-dimensionally change the relative movement of the eyeglasses lens in collaboration with the transport robot and the eyeglasses lens processing device, based on the refractive surface shape. For example, the controller may control the eyeglasses lens processing device, based on the refractive surface shape, may move the pair of lens holding shafts in the axial direction, may additionally control the transport robot, based on the refractive surface shape, and may move the eyeglasses lens in a direction perpendicular to the axial direction of the lens holding shafts; with this manner, the control unit may relatively move the eyeglasses lens with respect to the lens holding shafts. Alternatively, in a converse manner, the controller may control the transport robot, based on the refractive surface shape, may move the eyeglasses lens in the axial direction of the lens holding shafts, may additionally control the eyeglasses lens processing device, based on the refractive surface shape, and may move the lens holding shafts in the direction perpendicular to the axial direction of the lens holding shafts.

The present disclosure is not limited to the system described in the present embodiment. For example, a control program (software) for fulfilling functions of the following embodiment is supplied to a system or a device via a network or various storage media. Then, a controller (for example, a CPU) of the system or the device can read and execute the program.

For example, the control program causes the controller to execute a process including a control step of controlling the relative movement unit. In the control step, the eyeglasses lens is inserted into the predetermined insertion position of the gap between the pair of lens holding shafts by at least two-dimensionally changing the position of the eyeglasses lens, based on the acquired refractive surface shape.

### [Examples]

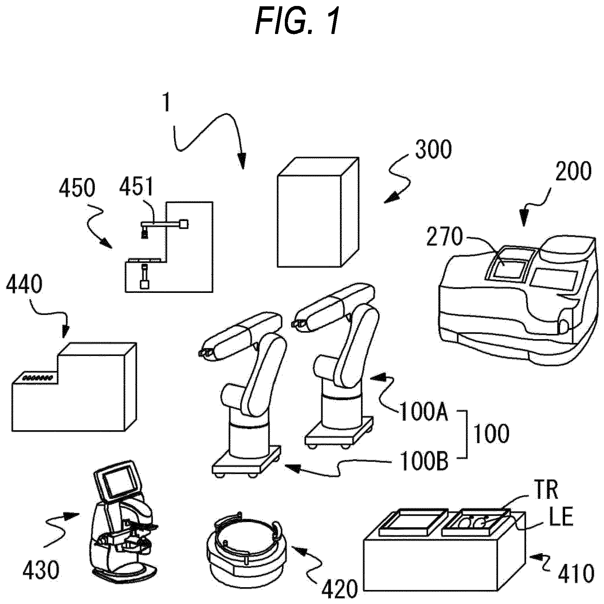

One typical example in the present disclosure will be described with reference to the drawings. FIG. 1 is a view illustrating the eyeglasses lens processing system 1 according to an example.

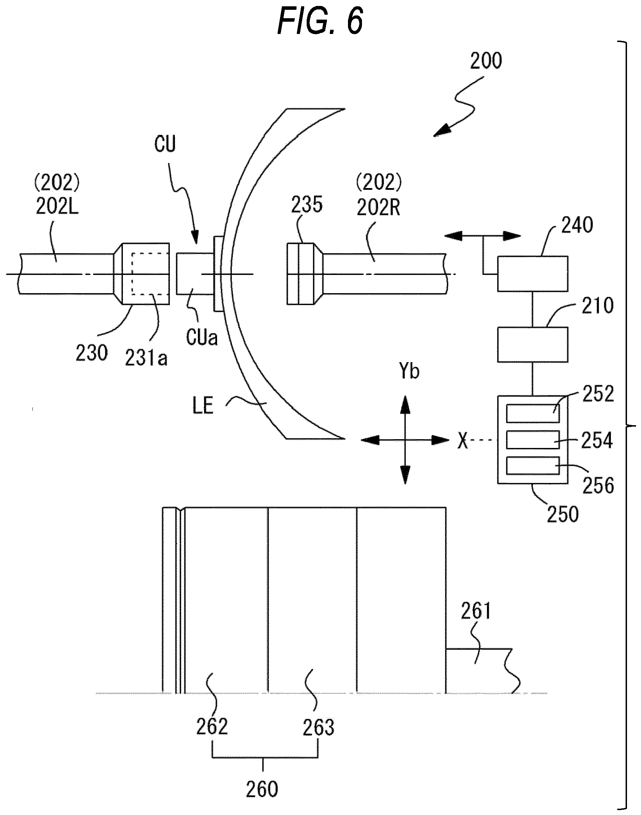

In FIG. 1, the eyeglasses lens processing system 1 includes the transport robot 100 and the eyeglasses lens processing device 200. The transport robot 100 is used to hold and transport an object. A plurality of transport robots 100 may be provided. In FIG. 1, the transport robot 100 is an example including two transport robots such as a transport robot 100A and a transport robot 100B. As illustrated in FIG. 6, the eyeglasses lens processing device 200 is used to process the peripheral edge of the eyeglasses lens (hereinafter, referred to as a lens LE) held by a pair of lens holding shafts 202 by using the processing tool 260.

The eyeglasses lens processing system 1 may additionally include the lens shape measurement device 300. The lens shape measurement device 300 is used to obtain the refractive surface shape of the lens LE. Furthermore, the eyeglasses lens processing system 1 may include at least one of a tray transport device 410, a centripetal device 420, a lens meter 430, an adhesive tape supply device 440, and a cup attachment device (blocker) 450.

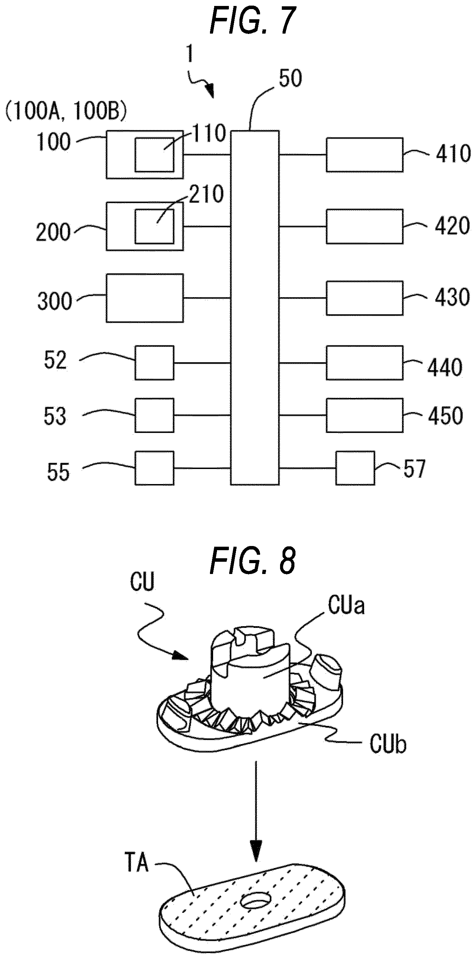

In the present example, the unprocessed lens LE is placed at a predetermined position on a tray TR transported to the tray transport device 410. In addition, a cup CU (refer to FIG. 8) serving as a processing jig of the lens LE is placed on the tray TR. Then, the processed lens LE is returned to the tray TR. The adhesive tape supply device 440 is used to supply an adhesive tape TA for fixing the cup CU to the refractive surface of lens LE. The centripetal device 420 is used to obtain a geometric center of a peripheral edge of the unprocessed lens LE. The lens meter 430 is used to measure optical characteristics such as an optical center, an astigmatic axis direction, and refractive power of the lens LE. The cup attachment device 450 is used to attach the cup CU to the refractive surface (for example, the front refractive surface) of the unprocessed lens LE.

### <Transport Robot>

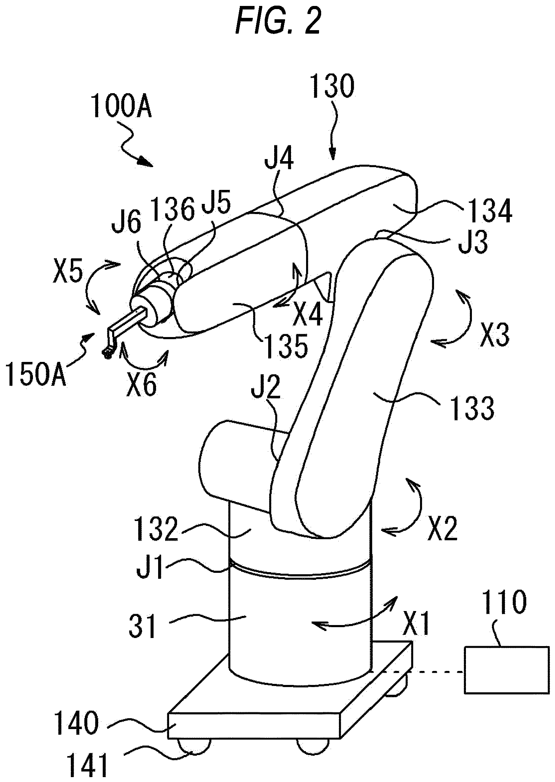

FIG. 2 is a view illustrating an example of the transport robot 100A. The transport robot 100A of the present example includes an arm unit 130 and a holding unit 150A provided in a tip of the arm unit 130. The arm unit 130 has a plurality of joint portions, and rotates each portion via the joint portions; with this manner, a posture of the holding unit 150A can be three-dimensionally and freely changed. In this manner, the object held by the holding unit 150A can be three-dimensionally and freely moved.

Specifically, the arm unit 130 of the transport robot 100A of the present example includes a base 131, a shoulder 132, a lower arm 133, a first upper arm 134, a second upper arm 135, a wrist 136, and the holding unit 150A.

The base 131 supports the whole arm unit 130. The shoulder 132 is connected to an upper portion of the base 131 via a first joint portion J1. The shoulder 132 rotates with respect to the base 131 around a rotation axis X1 extending in a direction intersecting with a base 140 (vertical direction in the present example). One end portion of the lower arm 133 is connected to a portion of the shoulder 132 via a second joint portion J2. The lower arm 133 rotates with respect to the shoulder 132 around a rotation axis X2 extending in a horizontal direction. The first upper arm 134 is connected via a third joint portion J3 to an end portion on a side opposite to a side connected to the shoulder 132 in the lower arm 133. The first upper arm 134 rotates with respect to the lower arm 133 around a rotation axis X3 extending in the horizontal direction. The second upper arm 135 is connected via a fourth joint portion J4 to a tip side (side provided with the holding unit 150A) of the first upper arm 134. The second upper arm 135 rotates with respect to the first upper arm 134 around a rotation axis X4. The wrist 136 is connected to a tip side of the second upper arm 135 via a fifth joint portion J5. The wrist 136 rotates with respect to the second upper arm 135 around a rotation axis X5. The holding unit 150A is connected to a tip side of the wrist 136 via a sixth joint portion J6. The holding unit 150A rotates with respect to the wrist 136 around a rotation axis X6. The arm unit 130 internally has a built-in motor for rotating each portion around each of the rotation axes X1 to X6.

The arm unit 130 is fixed to the base 140. In the present example, the base 140 is placed on a horizontal installation surface. The base 140 is provided with an arm movement unit 141 that moves the arm unit 130 in a direction parallel to the installation surface. The arm movement unit 141 is driven, so that the whole arm unit 130 moves in parallel on the installation surface. In addition, the transport robot 100A of the present example includes the control unit 110 that performs various controls (for example, controlling a motor that rotates each part and an actuator that drives each part).

The transport robot 100A as described above can three-dimensionally and freely move an object held by the holding unit 150A. Examples of detailed configurations of the arm unit 130 of the transport robot 100A are disclosed in JP2021-58947A and JP2019-141970A, for example.

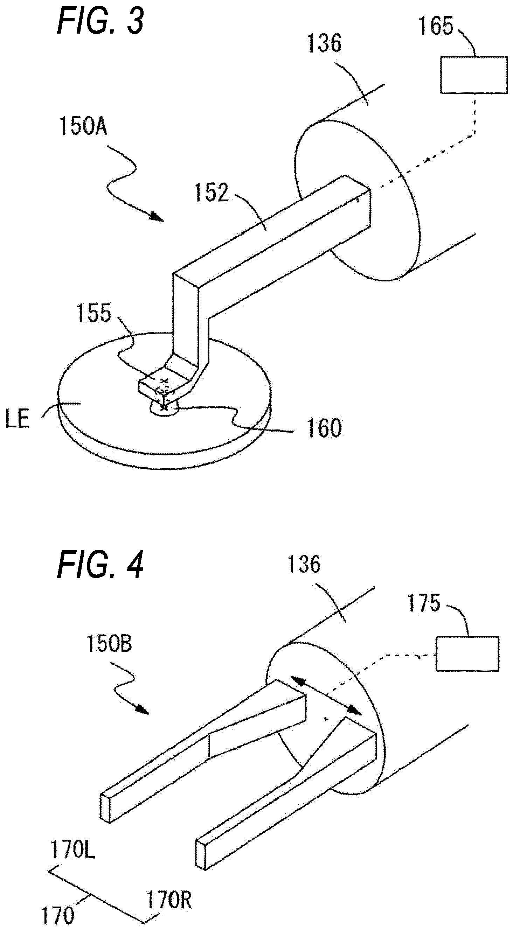

FIG. 3 is a view illustrating an example of the holding unit 150A provided in the transport robot 100A. The holding unit 150A holds the lens LE by suctioning the refractive surface of the lens LE. The holding unit 150A of the transport robot 100A has an arm 152 extending from the wrist 136, and an arm tip 155 is attached to extend from the arm 152 in a stepped manner. A suction unit 160 extending downward in FIG. 3 is attached to the arm tip 155. The arm tip 155 may be attached to the arm 152 in a stepped manner to such an extent that interference with the lens LE can be avoided when the rear refractive surface of the lens LE is suctioned by the suction unit 160. In addition, the arm tip 155 may be attached to the arm 152 in a stepped manner to such an extent that interference with the lens holding shafts 202 can be avoided when the lens LE is held by the lens holding shafts 202 provided in the eyeglasses lens processing device 200.

The suction unit 160 is connected to a suction source 165 via a suction path (not illustrated). Driving of the suction source 165 is controlled by the control unit 110. The suction source 165 may be a small compressor, or may be a small cylinder type which can suction air. As a matter of course, the suction unit 160 may have a configuration different from that in the example, may only have a configuration in which the lens LE of the object can be suctioned, held, and moved.

The transport robot 100B includes the arm unit 130 similar to that of the transport robot 100A, and the holding unit 150B provided in the tip of the arm unit 130. The transport robot 100B is just different from the transport robot 100A in the configuration of the holding unit 150B. Therefore, the same reference numerals will be used for elements up to the wrist 136 of the arm unit 130, and description thereof will be omitted.

FIG. 4 is a view illustrating an example of the holding unit 150B provided in the transport robot 100B. The holding unit 150B holds an object such as the cup CU by using a pair of right and left finger portions 170 which are opened and closed.

The holding unit 150B has the pair of right and left finger portions 170 extending from the wrist 136. The finger portion 170 includes a left finger 170L and a right finger 170R. An opening/closing mechanism section 175 opens and closes a portion between the left finger 170L and the right finger 170R. In other words, an object is pinched and held by changing an interval between the left finger 170L and the right finger 170R. Note that the opening/closing mechanism 175 is incorporated into the wrist 136. For example, the transport robot 100B including the holding unit 150B is used to transport and attach the cup CU fixed to the front refractive surface of the lens LE.

### <Lens Shape Measurement device>

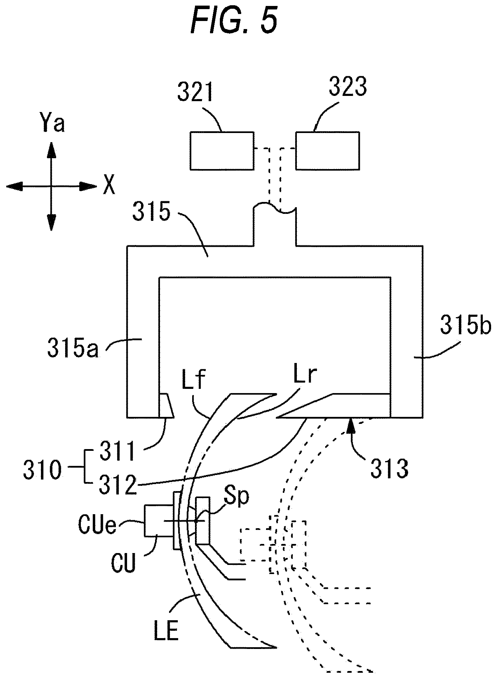

FIG. 5 is a view illustrating a lens shape measurement mechanism provided in the lens shape measurement device 300. The lens shape measurement device 300 of the example is used as an element of information acquisition unit for obtaining refractive surface shape information of the lens LE. The lens shape measurement device 300 of the example includes a tracing stylus 310 for measuring the refractive surface shape of the lens LE. In the example, the tracing stylus 310 includes a tracing stylus 311 brought into contact with the front refractive surface Lf of the lens LE, and a tracing stylus 312 brought into contact with the rear refractive surface of the lens LE. The tracing stylus 312 has a cylindrical side surface. A side surface of the tracing stylus 312 is used as a tracing stylus 313 brought into contact with the outer periphery of the lens LE to measure the outer shape of the lens LE. The tracing stylus 311 is attached to the tip of the left arm 315a provided in the arm 315. The tracing stylus 312 is attached to the tip of the right arm 315b provided in the arm 315 to face the tracing stylus 311. In addition, the lens shape measurement device 300 includes a sensor (detector) 321 for detecting a moving position of the tracing stylus 311 and 312 in the X-direction, and a sensor (detector) 323 for detecting a moving position of the tracing stylus 313 in a Ya-direction which is perpendicular to the X-direction. Detection data from the sensor 321 and the sensor 323 is output to the control device 50 (refer to FIG. 7) which will be described later.

It should be noted that the X-direction in FIG. 5 is the same as a direction in which the lens holding shafts 202 (refer to FIG. 6) of the eyeglasses lens processing device 200 extends. The Ya-direction is a direction perpendicular to the X-direction, is a direction in which the lens LE is to be moved, and a direction in which the arm 152 of the holding unit 150A extends during measurement. Here, the Ya-direction is a direction for measurement management, and may be different from a Yb-direction (refer to FIG. 6) in the eyeglasses lens processing device 200.

The arm 315 is held by a holding portion (not illustrated) to be movable in the X-direction. When the arm 315 is moved in the X-direction (rightward direction and leftward direction) with respect to reference positions in the X-direction (rightward-leftward direction), a biasing force (measurement pressure) is applied by a biasing member such as a spring so that the arms 315 respectively return to the right and left reference positions.

When the refractive surface shape of the lens LE is measured, the lens LE transported by the transport robot 100A is inserted between the tracing stylus 311 and the tracing stylus 312. Then, the position of the front refractive surface Lf of the lens LE in the X-direction is measured by moving the lens LE in the X-direction such that the tracing stylus 311 is pressed against the front refractive surface Lf of the lens LE. Similarly, the position of the rear refractive surface Lr of the lens LE in the X-direction is measured by moving the lens LE in the X-direction such that the tracing stylus 312 is pressed against the rear refractive surface Lr of the lens LE. The positions of the front refractive surface Lf and the rear refractive surface Lr of the lens LE in the X-direction are acquired by a detection result obtained by the sensor 321 and movement control data of the lens LE in the X-direction which is obtained by the transport robot 100A.

In addition, the arm 315 is held by a holding portion (not illustrated) to be movable in the Ya-direction. When the arm 315 is moved rearward with respect to the reference position in the Ya-direction (forward-rearward direction), a biasing force is applied by a biasing member such as a spring such that the arm 315 returns to the reference position in the Ya-direction. When the outer shape of the lens LE is measured, as illustrated by a dotted line in FIG. 5, the lens LE is moved in the Ya-direction by the transport robot 100A such that the peripheral edge of the lens LE in a radial direction is pressed against the tracing stylus 313. The position of the tracing stylus 313 with respect to the reference position in the Ya-direction is detected by the sensor 323, and the outer shape of the lens LE is acquired, based on this detection result and the movement control data of the lens LE in the Ya-direction which is obtained by the transport robot 100A.

### <Eyeglasses Lens Processing Device>

FIG. 6 is a view illustrating a schematic configuration of the eyeglasses lens processing device 200. The eyeglasses lens processing device 200 includes the lens holding shafts 202 (lens holding shafts 202L and 202R) for holding the lens LE, the processing tool 260 for processing the peripheral edge of the lens LE, the movement unit 250 for changing a relative positional relationship between the lens LE held by the lens holding shafts 202 and the processing tool 263, and the control unit 210 for controlling the movement unit 250. The eyeglasses lens processing device 200 includes the lens holding mechanism 240 for moving the lens holding shaft 202R to the lens holding shaft 202L side, and the lens holding mechanism 240 is controlled by the control unit 210.

For example, in the eyeglasses lens processing device 200 in the example, the lens holding shafts 202 extends in the horizontal direction, and is disposed in the eyeglasses lens processing device 200. The lens holding shafts 202 may extend in the upward-downward direction. The axial direction of the lens holding shafts 202 is defined as the X-direction (X-axis).

For example, the processing tool 260 includes at least one of a finishing tool 262 and a roughing tool 263 which are attached to a processing tool rotary shaft 261 and which have a V-groove for bevel forming. As the finishing tool 262 and the roughing tool 263, a grindstone is typically used, but a cutter may also be used.

For example, the movement unit 250 includes a first movement unit 252 that moves a carriage (not illustrated) for rotatably holding the lens holding shafts 202 in the axial direction (X-direction) of the lens holding shafts 202, and a second movement unit 254 that moves in the Yb-direction in which an axial distance between the lens holding shafts 202 and the processing tool rotary shaft 261 is changed. In addition, the movement unit 250 includes a rotation unit 256 that rotates the lens holding shafts 202 held by the carriage.

The lens LE is held by the pair of lens holding shafts 202L and 202R. The cup holder 230 is attached to one lens holding shaft 202L. A base portion CUa of the cup CU which is a processing jig fixed to the lens LE is inserted into an insertion hole 231a provided in the cup holder 230. A key (not illustrated) is formed in the insertion hole 231a, a key groove (not illustrated) is formed in the base portion CUa of the cup CU, and the key groove on the base portion CUa side is fitted into the key on the insertion hole 231a side; with this manner, the astigmatic axis angle of the lens LE and a reference direction of the lens holding shafts 202 are set to have a constant relationship. After the cup CU is mounted on the cup holder 230, the lens holding shaft 202R is moved to the lens LE side by the lens holding mechanism 240, and the lens LE is pressed by the lens presser 235 attached to the lens holding shaft 202R. In this manner, the lens LE is held by the pair of lens holding shafts 202.

An example of a detailed configuration of the eyeglasses lens processing device 200 is disclosed in JP2016-190287A, for example.

### <Control System Configuration of System>

FIG. 7 is a view illustrating a control system of the whole eyeglasses lens processing system 1. The eyeglasses lens processing system 1 includes a control device 50 for controlling the whole system. The control device 50 is connected to the control unit 110 of the transport robot 100 (100A and 100B), the control unit 210 of the eyeglasses lens processing device 200, and each sensor of the lens shape measurement device 300. In addition, the control device 50 is connected to the tray transport device 410, the centripetal device 420, the lens meter 430, the adhesive tape supply device 440, and the cup attachment device. The connection to the control device 50 is not limited to wired connection, and may be wireless connection which enables communication.

The control device 50 transmits an operation command signal to the control unit of each device in accordance with a transport process of the transport robot 100, and receives a signal from a processing device. The control unit of each device controls components of each device, based on a command signal from the control device 50. The control device 50 is connected to an operation unit 52, a display unit 53, and a storage unit 57. The control device 50 may also serve as a host computer. The storage unit 57 may store a control program for controlling an operation of the transport robot 100. In addition, when the lens LE is held by the lens holding shafts 202 in collaboration with the transport robot 100 and the eyeglasses lens processing device 200, the control program may be stored in the storage unit 57. The storage unit 57 may be a portable storage medium.

In addition, the control device 50 enables the interface 55 to communicate with an external device, and acquires lens processing information required for processing the peripheral edge of the lens LE. For example, the lens processing information includes at least one of a target lens shape serving as a target for processing the peripheral edge of the lens LE, layout data (positional relationship data of the optical center of the lens LE with respect to the target lens shape), and prescription data of the lens LE (astigmatic axis angle and prescriptions power of minus power or plus power). The lens processing information may be input by the operation unit 52.

In addition, the control device 50 and the control unit of each device may have both a function of an information output unit that outputs various types of information and a function of an information acquisition unit that acquires various types of information. For example, the control device 50 acquires refractive surface shape information of the lens LE (including the outer shape of the lens LE), based on the detection result of the lens shape which is obtained by the lens shape measurement device 300 and the control data of the transport robot 100. The control unit 110 of the transport robot 100 may be in charge of acquiring the refractive surface shape information of the lens LE. In addition, the control unit 110 of the transport robot 100 may acquire information about the outer shape of the cup CU, and may use the information for movement control in transporting the lens LE. The outer shape of the cup CU may be acquired by reading out information stored in advance in the storage unit 57 or a storage unit (not illustrated) provided in the control device 50.

### <Control Operation>

An operation of the eyeglasses lens processing system 1 having the configuration as described above will be described. First, a transport operation until the unprocessed lens LE is taken out from the tray TR and is attached to the cup CU will be briefly described.

The control unit 110 of the transport robot 100A which receives the command signal from the control device 50 controls the driving of the arm unit 130 and the suction unit 160, and transports the lens LE between the respective devices. The unprocessed lens LE placed on the tray TR is suctioned by the suction unit 160, and is held and taken out by the holding unit 150A. Thereafter, the unprocessed lens LE is transported to the centripetal device 420. In the centripetal device 420, the geometric center of the peripheral edge of the lens LE is detected, and the data is transmitted to the control device 50. Next, the lens LE is transported to a predetermined position of the lens meter 430 by the transport robot 100A. The lens meter 430 measures optical characteristics such as the optical center, the astigmatic axis direction, and the refractive power of the lens LE. Next, the lens LE is transported to a predetermined lens mounting table of the cup attachment device 450 by the transport robot 100A. In this case, based on the optical center of the lens LE which is obtained by the lens meter 430, the lens LE is aligned with a cup attachment reference axis of the cup attachment device 450 when the lens LE is moved by the transport robot 100A.

While the lens LE is transported between the respective devices by the transport robot 100A, the cup CU placed on the tray TR is taken out by the transport robot 100B, and is transported to the adhesive tape supply device 440. The cup CU is held and transported by the finger portions 170 provided in the transport robot 100B. In the adhesive tape supply device 440, for example, an adhesive tape TA having a predetermined shape illustrated in FIG. 8 is transported by a transport belt. FIG. 8 is a view illustrating a state where the adhesive tape TA adheres to the cup CU. The adhesive tape TA is used to fix the cup CU to the refractive surface of the lens LE. For example, the cup CU is fixed to the front refractive surface Lf of the lens LE via the adhesive tape TA.

An approximately elliptical flange portion CUb side of the cup CU transported by the transport robot 100B is placed on the adhesive tape TA transported by the transport belt of the adhesive tape supply device 440; with this manner, the adhesive tape TA adheres to a lower surface of the flange portion CUb. Then, an edge of the flange portion CUb of the cup CU to which the adhesive tape TA adheres is held by the finger portions 170 of the transport robot 100B, is transported to the blocking arm 451 (refer to FIG. 1) provided in the cup attachment device 450 by the transport robot 100B, and is mounted on the blocking arm 451.

When the cup CU is completely mounted on the blocking arm 451, the blocking arm 451 is moved to the lens LE side placed on the mounting table, and the cup CU is fixed to the front refractive surface Lf of the lens LE via the adhesive tape TA. For example, the center of cup CU is attached to the optical center of lens LE. Alternatively, the center of the cup CU is attached to the geometric center of the target lens shape, based on layout data (data on a positional relationship of the optical center of the lens LE with respect to the target lens shape) acquired by the control device 50. Note that when the cup CU is attached to the lens LE, a longitudinal direction of the flange portion CUb illustrated in FIG. 8 is the rightward-leftward direction of the lens LE when a user wears glasses.

When the cup CU is fixed to the lens LE, the blocking arm 451 is raised to lift the lens LE. Next, the transport robot 100A is driven, and after the holding unit 150A of the transport robot 100A is moved to below the rear refractive surface Lr of the lens LE, the suction unit 160 suctions the rear refractive surface Lr of the lens LE; with this manner, the lens LE is held by the holding unit 150A, and the lens LE is detached from the blocking arm 451. In this case, the holding unit 150A is moved such that a suction center of the suction unit 160 coincides with an attachment center of the cup CU. In addition, the holding unit 150A is moved such that a lateral direction (shortest direction) orthogonal to the longitudinal direction (longest direction) of the flange portion CUb of the cup CU coincides with the extending direction of the arm 152 of the holding unit 150A. In this manner, a holding reference position of the holding unit 150A and the attachment center of the cup CU are set to have a constant positional relationship.

### <Lens Shape Measurement>

Next, the lens LE held by the holding unit 150A is transported to the lens shape measurement device 300 by the transport robot 100A, and at least one refractive surface shape of the front refractive surface Lf and the rear refractive surface Lr of the lens LE is measured. For example, when curve information of the front refractive surface Lf of the lens LE is obtained, as illustrated in FIG. 5, the lens LE is moved to a plurality of (for example, at least three points) measurement positions in the Ya-direction by the transport robot 100A, and the tracing stylus 311 comes into contact with the front refractive surface Lf at each measurement position in the Ya-direction; with this manner, a position in the X-direction at each measurement position in the Ya-direction is detected by the sensor 321. Then, based on position information in the X-direction which is obtained by the sensor 321 and the movement information in the X-direction and the Ya-direction which is obtained by the transport robot 100A, curve information (here, curve information in the Ya-direction) of the front refractive surface Lf of the lens LE is obtained. The curve information on the rear refractive surface Lr of the lens LE is acquired by the same method of using the tracing stylus 312.

In addition, when the outer shape of the lens LE (outer shape in the Ya-direction with respect to the cup center) is acquired, an edge of the lens LE is moved in the Ya-direction toward the tracing stylus 313 by the transport robot 100A. Then, the sensor 323 detects that the outer shape of the lens LE is in contact with the tracing stylus 313, and the outer shape of the lens LE is acquired, based on detection information of the sensor 323 and movement information in the Ya-direction which is obtained by the transport robot 100A.

Through the above-described measurement, the outer shape of the lens LE held by the holding unit 150A of the transport robot 100A is acquired. That is, the outer shape of the lens LE with respect to a holding reference position Sp of the holding unit 150A is acquired. For example, the holding reference position Sp is a position where the suction center of the suction unit 160 passes through the tip of the arm tip 155. For example, a first axial direction in which the suction center of the suction unit 160 passes is set as the X-direction in FIG. 5, and a second axial direction orthogonal to the first axial direction is set as the Ya-direction in FIG. 5. A process for acquiring the lens shape (including the refractive surface shape and the outer shape) with respect to the holding reference position Sp may be performed by the control device 50, or may be performed by the control unit 110 of the transport robot 100A.

Additionally, the position in the X-direction of an end surface CUe of the cup CU fixed to the lens LE may be measured. For example, the lens LE is moved in the X-direction such that the tracing stylus 311 comes into contact with the end surface Cue; with this manner, based on the position information in the X-direction which is obtained by the sensor 321 and the movement information in the X-direction which is obtained by the transport robot 100A, the position information in the X-direction of the end surface CUe with respect to the holding reference position Sp in a state where the lens LE is held by the holding unit 150A is acquired.

The position information of the end surface CUe of the cup CU can be acquired even when measurement is not performed by the lens shape measurement device 300. For example, the outer shape of the cup CU is stored in advance in the storage unit 57 or the storage unit of the control device 50. Accordingly, based on the outer shape information and the curve information of the front refractive surface Lf of the lens LE, the position information of the end surface CUe in the X-direction with respect to the holding reference position Sp is acquired.

### <Lens Transport to Eyeglasses Lens Processing Device and Lens Movement with respect to Lens Holding Shaft>

When the shape of the lens LE is completely measured, the unprocessed lens LE held by the holding unit 150A is transported by the transport robot 100A, and the holding unit 150A enters from a loading port 270 (refer to FIG. 1) of the eyeglasses lens processing device 200. Next, after the lens LE is inserted between the lens holding shaft 202L and the lens holding shaft 202R which are provided in the eyeglasses lens processing device 200, the lens LE is moved such that the cup CU is mounted on the cup holder 230; with this manner, the lens LE is held by the lens holding shafts 202.

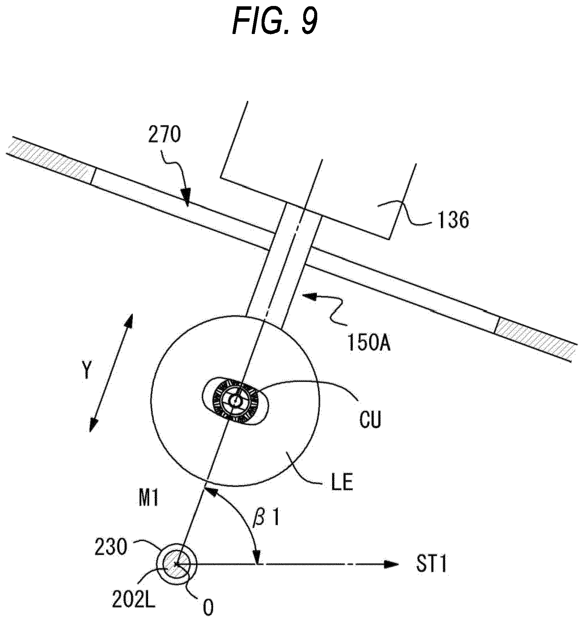

FIGS. 9 to 14 are views illustrating a state where the lens LE is mounted on the lens holding shafts 202 by the transport robot 100A. In each drawing, the axial direction of the lens holding shafts 202 is set as the X-direction. As illustrated in FIG. 9, the Y-direction perpendicular to the X-direction is a direction in which the holding unit 150A (lens LE) enters the lens holding shafts 202 (insertion direction), and is the extending direction of the arm 152 of the holding unit 150A. FIG. 9 is a view illustrating the direction in which the lens LE is caused to enter the lens holding shafts 202 by the transport robot 100A, and is a view when viewed in the axial direction of the lens holding shafts 202.

In the following example, with regard to the control for changing the relative positional relationship between the lens LE and the pair of lens holding shafts 202, a case where the driving of the transport robot 100A is controlled, so that the lens LE is moved with respect to the lens holding shafts 202 will be described as an example.

In FIG. 9, the transport robot 100A is controlled such that the lens LE enters along an entry axis M1 in the Y-direction tilted by an angle β1 with respect to a rotation reference direction ST1 of the lens holding shafts 202 when the lens LE is processed. The rotation reference direction ST1 of the lens holding shafts 202 is set to the rightward-leftward direction of the target lens shape (this is also a zero degree direction of the astigmatic axis of the lens LE), and for example, when the processing of the lens LE starts and ends, the rotation reference direction ST1 is set to the horizontal direction.

With regard to the entry of the lens LE, specifically, the holding unit 150A enters from the loading port 270 along the entry axis M1 passing through a center O of the lens holding shafts 202 placed at a standby position. In addition, the lens LE enters such that the lateral direction (shortest direction) of the flange portion CUb of the cup CU fixed to the lens LE is set to the Y-direction. Concurrently, a rotation angle of the lens holding shafts 202 is adjusted, and the holding unit 150A is placed on standby. In this manner, directions of the key of the insertion hole 231a of the cup holder 230 and the key groove of the base portion CUa of the cup CU are aligned, and the cup CU can be mounted on the cup holder 230.

In controlling the transport robot 100A, both the Y-direction and the Ya-direction (refer to FIG. 5) when the refractive surface shape of the lens LE is acquired are set to the extending direction of the arm 152 of the holding unit 150A, and the Y-direction is set to a direction having the same reference as that of the Ya-direction. That is, the curve information of the refractive surface is information in the same direction as the entry direction, and the refractive surface shape such as the curve information of the lens LE is managed as the shape in the Y-direction.

Next, an operation for inserting the lens LE between the lens holding shaft 202L and the lens holding shaft 202R will be described. When the lens LE is inserted, the end portion of the lens holding shaft 202L (cup holder 230 in the example) and the end portion of the lens holding shaft 202R (lens presser 235 in the example) are opened at a predetermined gap interval WH.

### <Normal Lens Movement>

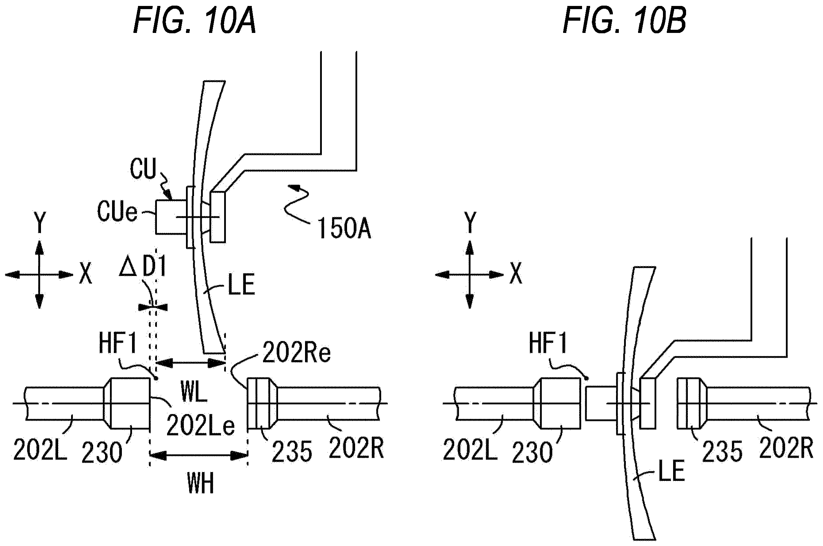

FIGS. 10A and 10B are views illustrating normal lens movement when the lens LE is a low curve lens, for example. For example, the low curve lens is in a state where a maximum lens distance WL of the lens LE (width between the end surface CUe of the cup CU in the X-direction and the end of the lens LE on the lens holding shaft 202R side) is smaller than a gap interval WH of the lens holding shafts 202.

In this case, as illustrated in FIG. 10A, the lens LE is positioned in the X-direction such that the width WL on the lens LE side enters the interval WH between the pair of lens holding shafts 202, and the lens LE is moved in the X-direction. For example, the lens LE is moved in the X-direction such that the end surface CUe of the cup CU is located at a point HF1 separated from the end portion 202Le (end portion of the cup holder 230) on the lens holding shaft 202L side on the lens holding shaft 202R side by a constant interference avoidance distance ΔD1 (for example, 1 mm). The positions of the lens holding shaft 202L and the lens holding shaft 202R (positions of the respective end portions) are managed as known positions on drive control of the transport robot 100 by the control unit 110.

Next, as illustrated in FIG. 10B, the lens LE is linearly moved in the Y-direction to a predetermined insertion position, and the lens LE is then completely inserted into the gap between the pair of lens holding shafts 202. The predetermined insertion position is a position where the central axis of the lens holding shafts 202 coincides with the holding center of the lens LE. The holding center of the lens LE is the same as the central axis of the cup CU, and is also the same as the holding center of the holding unit 150A. The Y-direction of the insertion direction of the lens LE may be the same as the Yb-direction of the moving direction of the lens holding shafts 202 in FIG. 6, or both may be different from each other.

Thereafter, the cup CU is mounted on the cup holder 230 by moving the lens LE to the lens holding shaft 202L side. Next, after the holding unit 150A of the transport robot 100A is separated from the lens LE, the lens holding shaft 202R is moved to the lens LE side; with this manner, the rear refractive surface Lr of the lens LE is pressed by the lens presser 235. In this manner, the lens LE is held by the pair of lens holding shafts 202.

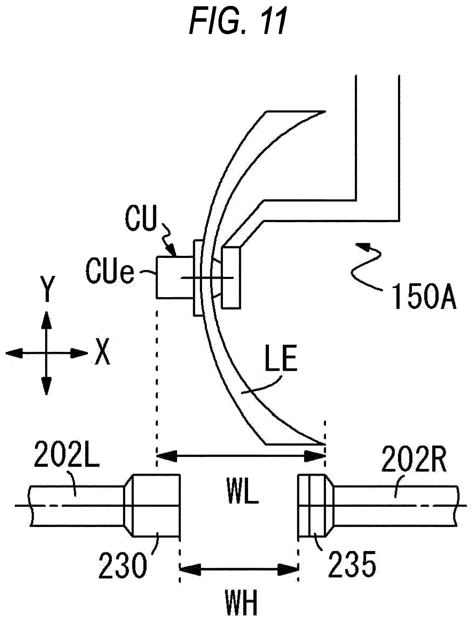

As described above, when the maximum lens distance WL of the lens LE is smaller than the gap interval WH, the lens LE can be inserted into the predetermined insertion position simply by linear single axis parallel movement of the lens LE in the Y-direction. However, depending on the shape of the lens LE, the lens LE may interfere with the lens holding shafts 202 in the simple parallel movement in the Y-direction. This problem is likely to arise, particularly when the curve of the refractive surface of the lens LE is a steep high curve. For example, as illustrated in FIG. 11, when the lens LE is a high curve lens and the maximum lens distance WL of the lens LE is larger than the gap interval WH, the lens LE cannot be inserted into the predetermined insertion position of the lens holding shafts 202 by the simple parallel movement in the Y-direction. When a countermeasure for sufficiently widening the gap between the pair of lens holding shafts 202 is taken, the eyeglasses lens processing device 100 is likely to increase in size, and the existing lens processing device 100 cannot be used. In this regard, the countermeasure is economically disadvantageous.

### <Lens Movement in Present Disclosure>

Therefore, the control unit 110 of the transport robot 100A of the present disclosure controls the driving of the transport robot 100A, and two-dimensionally changes the position of the lens LE in at least two axial directions of the X-direction and the Y-direction, based on the refractive surface shape of the lens LE which is acquired in advance; with this manner, the lens LE is inserted into the predetermined insertion position in the gap between the pair of lens holding shafts 202. For example, the control unit 110 two-dimensionally changes the position of the lens LE, based on at least one of the front refractive surface information and the rear refractive surface information of the lens LE. Hereinafter, an example of the lens movement in a case of a lens front surface reference based on the front refractive surface information of the lens LE, a case of a lens rear surface reference based on the rear refractive surface information of the lens LE, and a case based on both the front refractive surface information and the rear refractive surface information of the lens LE will be described.

### <Case of Lens Front Surface Reference>

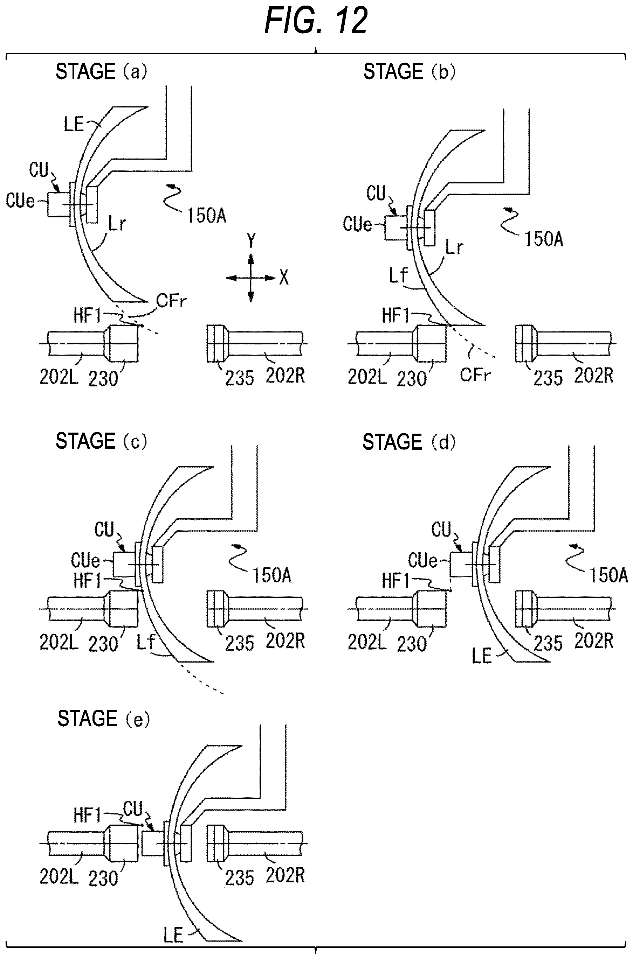

FIG. 12 is a view illustrating the lens movement in a case of the lens front surface reference. In this case, as illustrated with STAGE (a) shown in FIG. 12, based on the front refractive surface information (for example, front curve information) acquired in advance, the movement of the lens LE is two-dimensionally changed in an XY-direction such that the front refractive surface Lf passes through the point HF1 set on the lens holding shaft 202L side. For example, the point HF1 is set to a point separated in the X-direction from the end portion of the lens holding shaft 202L side (end portion of the cup holder 230) to the lens holding shaft 202R side by the constant interference avoidance distance ΔD1 (for example, 1 mm). In addition, the position of the point HF1 in the Y-direction is a point on a side close to the end portion of the lens holding shaft 202L side in the insertion direction of the lens LE. For example, when the lens is moved in this case, the control unit 110 or the control device 50 calculates (acquires) a movement trajectory in which the front refractive surface Lf (front curve CLf) passes through the point HF1.

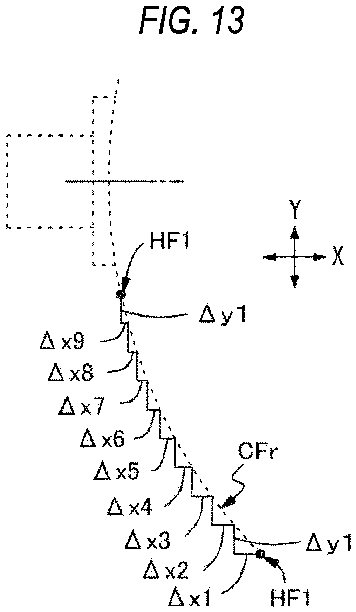

FIG. 13 is a view illustrating an example of calculating a movement trajectory in the lens front surface reference. For example, as illustrated in FIG. 13, for every minute movement distance Δy1 in the Y-direction, movement distances Δx1, Δx2, Δx3, ··· , Δx9 in the X-direction are calculated such that the point HF1 relatively moves on the front curve CLf on the front refractive surface Lf. In this manner, the movement trajectory in the lens front surface reference is determined.

Referring back to the description in FIG. 12, when the lens outer shape information of the unprocessed lens LE is not acquired, as illustrated with STAGE (a) shown in FIG. 12, based on the calculated movement trajectory, the lens LE is two-dimensionally moved in the XY-direction such that the front curve CLf of the front refractive surface Lf passes through the point HF1. When the lens outer shape information of the lens LE is acquired, as illustrated with STAGE (b) shown in FIG. 12, the lens LE may be moved in the Y-direction until the peripheral edge of the lens front surface reaches the point HF1. Thereafter, the lens LE may be moved in the XY-direction such that the front refractive surface Lf passes through the point HF1. The lens outer shape information may be acquired, based on a general maximum outer shape (for example, 100 mm in diameter) of the unprocessed lens LE, even when the lens outer shape is not measured by the lens shape measurement device 300.

Next, as illustrated with STAGE (c) shown in FIG. 12, when the flange portion CUb of the cup CU is close to the vicinity of the point HF1 (for example, a predetermined distance in the Y-direction to avoid interference), the movement in the Y-direction is stopped. In this case, the end portion of the lens LE on the rear refractive surface Lr side passes by the lens holding shaft 202R and the lens presser 235 in the Y-direction. Therefore, the rear refractive surface of the lens LE is prevented from interfering with the lens holding shaft 202R and the lens presser 235. Thereafter, as illustrated with STAGE (d) shown in FIG. 12, the lens LE is moved in the X-direction until the position of the end surface CUe of the cup CU in the X-direction reaches the point HF1. In this manner, the cup CU and the lens LE can be inserted into the predetermined insertion position without interfering with the lens holding shafts 202, and the lens LE can be properly held by the lens holding shafts 202.

Next, as illustrated with STAGE (e) shown in FIG. 12, the lens LE is moved in the Y-direction, and is inserted into the predetermined insertion position. Thereafter, the lens LE is moved to the lens holding shaft 202L side, so that the cup CU is mounted on the cup holder 230. Thereafter, the suction unit 160 is retracted, and the lens holding shaft 202R is moved to the lens LE side; with this manner, the lens LE is held by the lens holding shafts 202.

### <Case of Lens Rear Surface Reference>

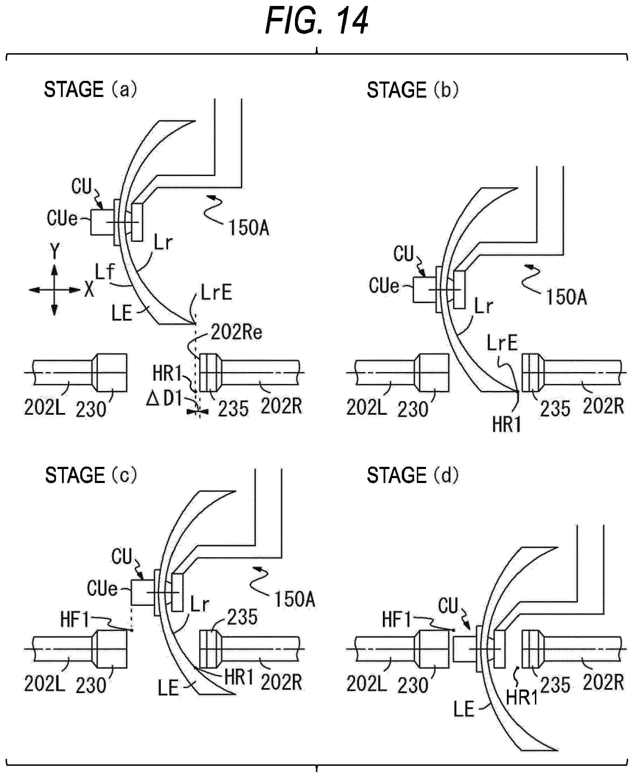

FIG. 14 is a view illustrating the lens movement in a case of lens rear surface reference. In this case, as illustrated in FIG. 14, based on the rear refractive surface information (for example, rear curve information) acquired in advance, the movement of the lens LE is two-dimensionally changed in the XY-direction such that the rear refractive surface Lr passes through the point HR1 set on the lens holding shaft 202R side. For example, the point HR1 is set to a point separated from the end portion 202Re (end portion of the lens presser 235) on the lens holding shaft 202R side to the lens holding shaft 202L side in the X-direction by the constant interference avoidance distance ΔD1 (for example, 1 mm). In addition, contrary to point HF1, the position of point HR1 in the Y-direction is a point on a side far from the end portion on the lens holding shaft 202R side in the insertion direction of lens LE. The movement trajectory of the rear refractive surface Lr during the lens movement in this case is also calculated (acquired) by the control unit 110 or the control device 50, based on the same concept as that in the case of the lens front surface reference.

First, before the lens LE is inserted into the gap between the pair of lens holding shafts 202, a rear surface end LrE of the rear refractive surface Lr is located at the position of the point HR1 in the X-direction, as illustrated with STAGE (a) shown in FIG. 14. Next, as illustrated with STAGE (b) shown in FIG. 14, the lens LE is moved in the Y-direction such that the rear surface end LrE of the lens LE is located at the point HR1. Next, based on the calculated movement trajectory, the lens LE is two-dimensionally moved in the XY-direction such that the rear refractive surface Lr passes through the point HR1. Then, as illustrated with STAGE (c) shown in FIG. 14, when the position of the end surface CUe of the cup CU in the X-direction reaches the point HF1, the cup CU and the lens LE can be inserted into the predetermined insertion position without interfering with the lens holding shafts 202. Thereafter, the lens LE is moved in the Y-direction, so that the lens LE is inserted into a predetermined insertion position, as illustrated with STAGE (d) shown in FIG. 14. In this manner, the lens LE can be properly held by the lens holding shafts 202.

### <Case Based on Front Refractive Surface Information and Rear Refractive Surface Information>

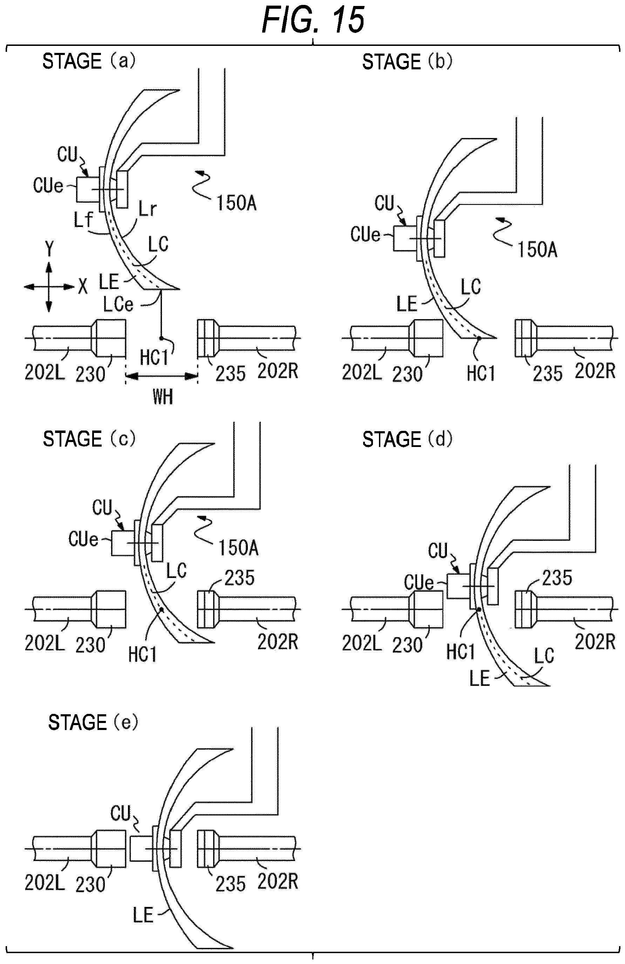

FIG. 15 is a view illustrating the lens movement based on both the front refractive surface information and the rear refractive surface information of the lens LE. As illustrated with STAGE (a) shown in FIG. 15, first, with regard to the lens LE held by the holding unit 150A, based on the front refractive surface information and the rear refractive surface information which are acquired in advance, an intermediate curve LC is set in an intermediate portion between the front refractive surface Lf and the rear refractive surface Lr. In addition, a movement reference point HCl is set in an intermediate portion of the gap interval WH of the lens holding shafts 202. For example, the point HCl is set on the central axis of lens holding shafts 202. Then, the lens LE is moved in the Y-direction on the point HCl such that a lens peripheral edge end LCe of the intermediate curve LC is located.

Next, as illustrated with STAGE (b) shown in FIG. 15, the lens LE is moved in the Y-direction such that the lens peripheral edge end LCe is located at the point HCl. Thereafter, as illustrated with STAGE (c) shown in FIG. 15, the lens LE is two-dimensionally moved in the XY-direction such that the intermediate curve LC passes through the point HCl. Then, as illustrated with STAGE (d) shown in FIG. 15, when the position of the end surface CUe of the cup CU in the X-direction reaches a position separated from the end portion 202Le on the lens holding shaft 202L side by a constant interference avoidance distance, the cup CU and the lens The LE can be inserted into the predetermined insertion position without interfering with the lens holding shafts 202. Thereafter, the lens LE is moved in the Y-direction, so that the lens LE is inserted into a predetermined insertion position, as illustrated with STAGE (e) shown in FIG. 15.

Thereafter, the cup CU is mounted on the cup holder 230 by moving the lens LE to the lens holding shaft 202L side. Next, after the suction of the suction unit 160 of the transport robot 100A is released and the holding unit 150A is separated from the lens LE, the lens holding shaft 202R is moved to the lens LE side, so that the lens LE is held by the pair of lens holding shafts 202.

The cup holder 230 may be provided with a latch mechanism that maintains holding of the cup CU. In this manner, even when the suction of the suction unit 160 of the transport robot 100A is released and the holding unit 150A is separated from the lens LE, a possibility that the lens LE mounted on the cup holder 230 falls down is reduced. In addition, a magnet may be used instead of the latch mechanism. For example, the magnet may be provided in either the cup holder 230 or the cup CU, and a metal member attracted by a magnetic force of the magnet may be provided on the other side.

### <Operation after Eyeglasses Lens is held by Lens Holding Shaft>

As described above, when the lens LE is held by the lens holding shafts 202, the driving of the movement unit 250 is controlled by the control unit 210 of the eyeglasses lens processing device 200. Based on the lens processing information such as the target lens shape included in the command from the control device 50, the peripheral edge of the lens LE held by the lens holding shafts 202 is processed by the processing tool 260.

When the peripheral edge of the lens LE is completely processed, the transport robot 100A is driven again, and the processed lens LE held by the lens holding shafts 202 is taken out by the transport robot 100A. When the processed lens LE is taken out, and when the processed lens LE is sufficiently small, the lens LE can be taken out by linear movement in the Y-direction. However, depending on a processed shape of the processed lens LE, the lens LE may interfere with the lens holding shafts 202 in some cases. In this case as well, the movement of the lens LE is at least two-dimensionally changed in the XY-direction, based on the refractive surface shape of the processed lens LE; with this manner, the pair of lens holding shafts 202 does not interfere with the lens holding shafts 202, and the processed lens LE can be taken out from the gap between the pair of lens holding shafts 202. For example, the processed lens LE may be taken out from a predetermined taking-out position of the transport robot 100A by performing a reverse operation of the operation for inserting the unprocessed lens LE into the predetermined insertion position.

The processed lens LE taken out from the eyeglasses lens processing device 200 by the transport robot 100A is transported by the transport robot 100A, and is returned to a predetermined position on the tray TR.

### <Modification Example>

Hitherto, typical examples of the present disclosure have been described. Meanwhile, the present disclosure is not limited to the examples described here, and various modifications can be made.

For example, in the above description, when the lens LE is transported from the lens shape measurement device 300 to the eyeglasses lens processing device 200, the lens LE is held by the suction unit 160 provided in the holding unit 150A of the transport robot 100A. However, the lens LE may be held by the finger portions 170 of the holding unit 150B provided in the transport robot 100B. In this case, the lens LE is held in such a manner that the peripheral edge of the flange portion CUb of the cup CU attached to the front refractive surface of the lens LE is held by the finger portions 170. The peripheral edge of the flange portion CUb is held by the finger portion 170. Accordingly, even when the cup CU is mounted on the cup holder 230, the finger portions 170 do not interfere with the cup holder 230, and the cup CU can be mounted.

In a case of the configuration in which the lens LE is held by the finger portion 170, when the rear refractive surface Lr of the lens LE is suctioned by the suction unit 160, unnecessarily interfering substances can be removed on the rear refractive surface Lr side. Therefore, the lens LE is more freely moved in the XY-direction when the lens LE is inserted into the lens holding shafts 202, and the lens LE can be more properly held by the lens holding shafts 202.

In addition, the finger portions 170 may be provided in the holding unit 150A of the transport robot 100A including the suction unit 160. In this case, the lens LE and the cup CU can be held by one transport robot 100A. Accordingly, a space for disposing the transport robot 100 is saved, and an economically advantageous configuration is achieved. Even in the transport process of objects between the respective devices, the suction unit 160 and the finger portions 170 can be suitably used.

In addition, suction units such as the suction unit 160 may be respectively provided in the left finger 170L and the right finger 170R which are provided in the transport robot 100B. In this case as well, the suction unit and the finger portions 170 can be suitably used in the transport process of the object between the respective devices. For example, even when the lens LE is transported to be held by the lens holding shafts 202, the lens LE can be held in such a manner that the front refractive surface Lf side of the lens LE is suctioned by the suction units respectively provided in the left finger 170L and the right finger 170R. In this manner, interference of the member with the lens holding shafts 202 can be avoided, and the lens LE can be more properly held by the lens holding shafts 202.

In addition, in the above-described example, the lens shape measurement device 300 is used to acquire the refractive surface shape of the lens LE, but the present disclosure is not limited thereto. For example, when design data of the lens LE is known, or when attachment data attached to a processing target lens LE includes shape data of the front refractive surface Lf and the rear refractive surface Lr, the data may be acquired in advance by the control device 50.

In addition, in the above description, an example has been described in which the eyeglasses lens processing system 1 includes the tray transport device 410, the centripetal device 420, the lens meter 430, the adhesive tape supply device 440, and the cup attachment device 450. However, without being limited thereto, a small-scale lens processing facility may include the transport robot 100 and the lens shape measurement device 300 in addition to the eyeglasses lens processing device 200. In this case, the unprocessed lens LE to which the cup CU is attached in advance is supplied to the tray, and the transport robot 100 transports the unprocessed lens LE to achieve lens processing automation.

In addition, in an operation for moving the lens with respect to the lens holding shafts 202, the control unit 110 (or the control device 50) may determine whether or not the maximum lens distance WL of the lens LE in the X-direction is smaller than the gap interval WH of the lens holding shafts 202. When it is determined that the maximum lens distance WL is smaller, two-dimensional lens movement control based on the refractive surface shape of the lens LE is not performed, and the processed lens LE is moved by single axis lens movement in the Y - direction. In this case, two-dimensional lens movement is not required. Therefore, the lens movement can be quickly performed. On the other hand, when it is determined that the maximum lens distance WL is larger than the gap interval WH, the lens LE is inserted into the predetermined insertion position by at least two-dimensionally changing the position of the lens LE in the XY-direction. In this manner, the lens LE is properly held without interfering with the lens holding shafts 202. In this determination, the lens movement may be controlled when the processed lens LE is taken out from the lens holding shafts 202.

In addition, in the above-described example, an example has been described in which the transport robot 100 includes the arm unit 130 having the plurality of joint portions and the object held by the holding unit 150A can be three-dimensionally and freely moved. However, the present disclosure is not limited thereto. For example, when the lens LE is transported to the lens holding shafts 202 of the eyeglasses lens processing device 200, a configuration may be adopted in which the transport robot can be at least two-dimensionally moved in the XY-directions.

In addition, an example has been described above in which the cup CU of the processing jig is used to hold the lens LE by using the lens holding shafts 202. However, the present disclosure is not limited thereto. For example, even when the cup CU is not used, the lens holding shafts 202 can hold the lens LE by providing the lens holding shafts 202 with a mechanism for suctioning the lens LE. In this case, the predetermined insertion position where the lens LE is moved between the lens holding shafts 202 may be the same as the predetermined insertion position described above, or may be a position where a positional relationship between the central axis of the lens holding shafts 202 and the holding center (holding reference position Sp) of the lens LE is managed.

In addition, the above-described control for the lens movement based on the refractive surface shape of the lens LE is merely an example, and the present disclosure is not limited to the above-described control.

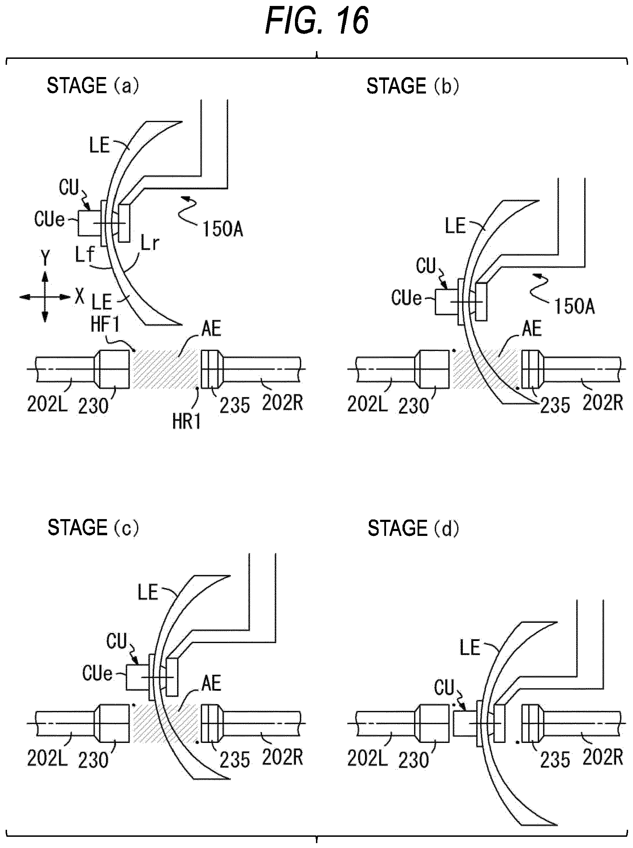

For example, FIG. 16 is a view illustrating an example of a modification example of the lens movement based on the refractive surface shape of the lens LE. In STAGE (a) shown in FIG. 16, a shaded region AE is a region of the gap between the pair of lens holding shafts 202 (in the example, a region between the cup holder 230 and the lens presser 235). For example, the region AE is a region defined by the point HF1 and the point HR1 which are described in the previous example, and is determined as a region having a margin to avoid interference with lens holding shafts 202.

When the lens LE is moved to the predetermined insertion position of the lens holding shafts 202, based on the shape information (for example, the curve information) of the front refractive surface Lf and the rear refractive surface Lr of the lens LE, the lens LE is moved in the XY-direction, based on the information about the front refractive surface Lf and the rear refractive surface Lr, such that both the front refractive surface Lf and the rear refractive surface Lr pass through the inside of the region AE. For example, in an initial stage, as illustrated with STAGE (a) shown in FIG. 16, when the lens LE is moved in the Y-direction and the front refractive surface Lf is about to be away from the region AE, the movement in the X-direction is added as illustrated with STAGE (b) shown in FIG. 16. Then, when the position of the end surface CUe of the cup CU in the X-direction enters the inside of the region AE (refer to STAGE (c) shown in FIG. 16), the lens LE is moved in the Y-direction; with this manner, the lens LE can be inserted into the predetermined insertion position (refer to STAGE (d) shown in FIG. 16). This movement trajectory of the lens LE in the XY-directions is calculated in advance, based on the positional relationship between the front refractive surface Lf and the rear refractive surface Lr with respect to the region AE.

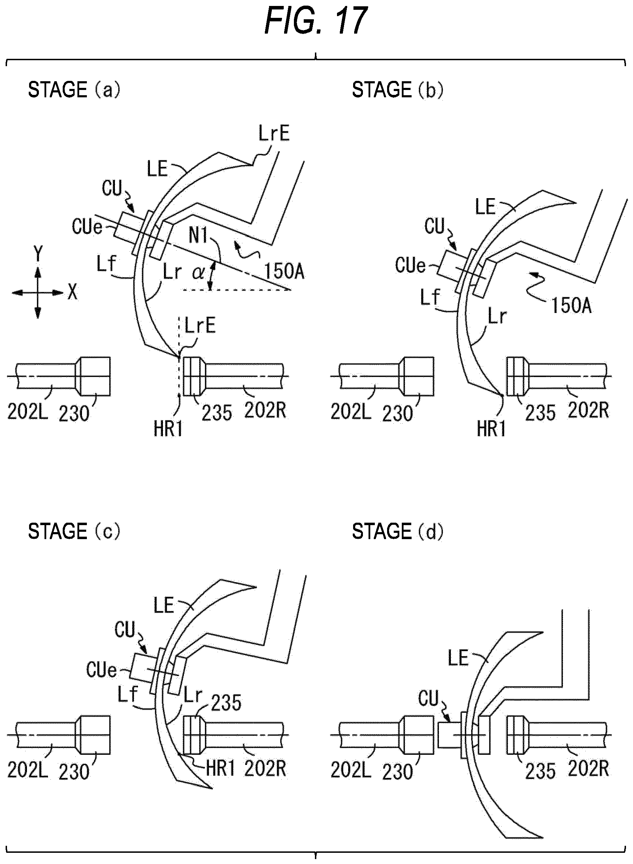

FIG. 17 is a view illustrating another modification example of the lens movement based on the refractive surface shape of the lens LE. In describing FIGS. 12 to 16 above, an example has been described in which the lens LE is two-dimensionally moved in the XY-directions. However, tilting movement of the lens LE may be further added. For example, FIG. 17 is an example in which the tilting of the lens LE is added to the lens movement in the lens rear surface reference in FIG. 14.

For example, before the lens LE is inserted into the gap between the lens holding shafts 202, the refractive surface of the lens LE is tilted with respect to the direction (Y-direction) perpendicular to the axial direction (X-direction) of the lens holding shafts. For example, as illustrated with STAGE (a) shown in FIG. 17, the lens LE is tilted at an angle α (FIG. 17 illustrates an angle of a holding center axis N1 of the holding unit 150A with respect to the X-direction) such that the end portion LrE of the rear refractive surface Lr located on a side far from the lens holding shaft 202R is close to the lens holding shaft 202R). In other words, the lens LE is tilted at the angle α such that the rear refractive surface Lr side of the holding center axis N1 having a positional relationship parallel to the X-direction is close to the lens holding shaft 202R. For example, the initial angle α may be set to a constant angle which enables the holding unit 150A to avoid interference with the lens holding shaft 202R and the lens presser 235 within a range in which the holding unit 150A can be tilted. Alternatively, the initial angle α may be determined, based on the refractive surface shape of the lens LE.

Next, the lens LE is moved in the Y-direction such that the rear surface end LrE of the lens LE is located at the point HR1 (refer to STAGE (b) shown in FIG. 17). When the rear surface end LrE is located at the point HR1, the lens LE is two-dimensionally moved in the XY-direction such that the rear refractive surface Lr passes through the point HR1, and the tilting angle α is gradually returned as the lens LE moves in the Y-direction (refer to STAGE (c) shown in FIG. 17). Then, the tilting angle α is returned to zero, and the lens LE is moved in the XY-direction such that the end surface CUe of the cup CU in the X-direction is located closer to the holding shaft 202R side than the point HF1; with this manner, the lens LE is inserted into the predetermined insertion position (refer to STAGE (d) shown in FIG. 17).

In this way, since the tilting movement of the lens LE is added to the movement of the lens LE in the XY-direction, an applicable shape of the lens LE which can be inserted into the predetermined insertion position of the lens holding shafts 202 is widened.

In addition, with regard to the tilting movement of the lens LE, when the holding portion (holding unit 150A or 150B) of the transport robot 100 is configured to hold the front refractive surface Lf of the lens LE, much more free lens movement is achieved. For example, since there is no unnecessarily interfering substance on the rear refractive surface Lr side, the curve center of the rear refractive surface Lr can be positioned on or in the vicinity of the axis center of the lens holding shaft 202R. Therefore, the tilting angle α of the lens LE can be increased. In this manner, for example, the lens movement is performed to return the tilting of the lens LE, based on the curve center. Even when the gap interval WH of the lens holding shafts 202 is narrow, an applicable range of the shape of the lens LE which can be inserted into the predetermined insertion position of the lens holding shafts 202 is widened.

In addition, the tilting movement of the lens LE is not limited to the example in FIG. 17. For example, the tilting movement may be performed in addition to the two-dimensional movement of the lens LE in the XY-direction such that both the front refractive surface Lf and the rear refractive surface Lr of the lens LE enter the inside of the region AE illustrated in FIG. 16.

In addition, in the above description, the two-dimensional movement of the lens LE based on the refractive surface shape is performed by controlling the driving of the transport robot 100. However, the present disclosure is not limited thereto. For example, the eyeglasses lens processing device 200 (movement unit 250) may be controlled, and the pair of lens holding shafts 202 may be two-dimensionally moved in the XY-direction, based on the refractive surface shape; with this manner, the movement of the lens LE may be relatively and two-dimensionally changed. In this case, first, the lens LE is transported by the transport robot 100 to a position where the lens holding shafts 202 is movable in the Y-direction, and thereafter, the lens holding shafts 202 is two-dimensionally moved in the XY-direction in the refractive surface shape. In this case, the Y-direction of the insertion direction of the lens LE is the same as the Yb-direction of the moving direction of the lens holding shafts 202 in FIG. 6.

In addition, both the transport robot 100 and the eyeglasses lens processing device 200 may be controlled, and the relative movement of the lens LE may be two-dimensionally performed in collaboration with the transport robot 100 and the eyeglasses lens processing device 200, based on the refractive surface shape. For example, the eyeglasses lens processing device 200 may be controlled, based on the refractive surface shape, and the pair of lens holding shafts 202 may be moved in the X-direction. In addition, the transport robot 200 may be controlled, based on the refractive surface shape, and the lens LE held by the transport robot 200 may be moved in the Y-direction; with this manner, the lens LE may be relatively moved with respect to the lens holding shafts 202. Alternatively, conversely, the lens LE held by the transport robot 200 may be moved in the X-direction, and the pair of lens holding shafts 202 may be moved in the Y-direction; with this manner, the lens LE may be relatively moved with respect to the lens holding shafts 202.

## Claims

1. An eyeglasses lens processing system comprising:
a transport robot (100) configured to hold an eyeglasses lens in a holding portion (150A, 150B) to transport the eyeglasses lens;
an eyeglasses lens processing device (200) configured to process the eyeglasses lens held between a pair of lens holding shafts (202);
a shape information acquisition unit (300) configured to acquire information about a refractive surface shape of the eyeglasses lens; and
a relative movement unit (100, 250) configured to change a relative positional relationship between the eyeglasses lens held by the holding portion of the transport robot and the pair of lens holding shafts, in which the relative movement unit at least two-dimensionally changes the relative positional relationship, based on acquired information of the refractive surface shape, to insert the eyeglasses lens into a predetermined insertion position in a gap between the pair of lens holding shafts.

2. The eyeglasses lens processing system according to claim 1,
wherein the relative movement unit at least two-dimensionally changes a position of the eyeglasses lens based on a positional relationship of a refractive surface of the eyeglasses lens with respect to positions of the pair of lens holding shafts, and
the positional relationship of the refractive surface is obtained based on the information about the refractive surface shape acquired by the shape information acquisition unit.

3. The eyeglasses lens processing system according to claim 1 or 2,
wherein the pair of lens holding shafts include:
a first holding shaft (202L) that holds a front refractive surface side of the eyeglasses lens; and
a second holding shaft (202R) that holds a rear refractive surface side of the eyeglasses lens, and
the relative movement unit two-dimensionally changes the position of the eyeglasses lens such that a refractive surface of the eyeglasses lens held by the holding portion of the transport robot passes through a predetermined point or a predetermined region determined with regard to at least one position of the first holding shaft and the second holding shaft, to insert the eyeglasses lens into the predetermined insertion position.

4. The eyeglasses lens processing system according to claim 3,
wherein the shape information acquisition unit acquires at least one shape of a front refractive surface and a rear refractive surface of the eyeglasses lens,
the relative movement unit inserts the eyeglasses lens into the predetermined insertion position by performing any one control of:
(a) a first control for two-dimensionally changing the position of the eyeglasses lens such that the front refractive surface passes through a predetermined first point (HF1) determined with regard to a position of the first holding shaft;
(b) a second control for two-dimensionally changing the position of the eyeglasses lens such that the rear refractive surface passes through a predetermined second point (HR1) determined with regard to a position of the second holding shaft;
(c) a third control for two-dimensionally changing the position of the eyeglasses lens such that an intermediate section between the front refractive surface and the rear refractive surface passes through a predetermined third point (HCl) set in an intermediate portion between the first holding shaft and the second holding shaft; and
(d) a fourth control for two-dimensionally changing the position of the eyeglasses lens such that both the front refractive surface and the rear refractive surface pass through a predetermined region (AE) set between the first holding shaft and the second holding shaft.

5. The eyeglasses lens processing system according to claim 3 or 4,
wherein the relative movement unit tilts a refractive surface of the eyeglasses lens with respect to a direction perpendicular to an axial direction of the lens holding shafts, before inserting the eyeglasses lens into the gap between the pair of lens holding shafts.

6. The eyeglasses lens processing system according to any one of claims 3 to 5,
wherein before inserting the eyeglasses lens into the gap between the pair of lens holding shafts, the relative movement unit tilts the eyeglasses lens such that an end portion (LrE) of the rear refractive surface which is located on a side farther from the second holding shaft is closer to the second holding shaft, and changes the position of the eyeglasses lens such that the tilting is returned as the eyeglasses lens moves in an insertion direction perpendicular to the lens holding shaft.

7. The eyeglasses lens processing system according to any one of claims 3 to 6,
wherein the shape information acquisition unit acquires outer shape information of a cup (CU) of a processing jig fixed to a front refractive surface of the eyeglasses lens, and
the relative movement unit inserts the eyeglasses lens into the gap between the first holding shaft and the second holding shaft until the eyeglasses lens reaches a position where the cup is not in contact with the first holding shaft, based on the outer shape information, and thereafter moves the eyeglasses lens to an insertable position of the cup in an axial direction of the lens holding shaft to insert the eyeglasses lens into the predetermined insertion position.

8. The eyeglasses lens processing system according to any one of claims 1 to 7,
wherein the shape information acquisition unit acquires a lens distance in an axial direction of the lens holding shafts from an end portion of a cup of a processing jig fixed to a front refractive surface of the eyeglasses lens to an end portion of a rear refractive surface of the eyeglasses lens, and
the relative movement unit determines whether or not the lens distance is smaller than a gap interval between the pair of lens holding shafts, and when determining that the lens distance is smaller than the gap, the relative movement unit inserts the eyeglasses lens into the predetermined insertion position without performing control for two-dimensionally moving the eyeglasses lens based on the refractive surface shape.

9. A control program of an eyeglasses lens processing system including a transport robot (100) configured to hold an eyeglasses lens in a holding portion (150A, 150B) to transport the eyeglasses lens, an eyeglasses lens processing device (200) configured to process the eyeglasses lens held between a pair of lens holding shafts (202), a shape information acquisition unit (300) configured to acquire information about a refractive surface shape of the eyeglasses lens, a relative movement unit configured to change a relative positional relationship between the eyeglasses lens held by the holding portion of the transport robot and the pair of lens holding shafts, and a controller (110, 210, 50), the control program comprising instructions which, when executed by the controller, cause the eyeglasses lens processing system to perform:
a control step of controlling the relative movement unit, in which the eyeglasses lens is inserted into a predetermined insertion position in a gap between the pair of lens holding shafts by at least two-dimensionally changing the relative positional relationship based on acquired information about the refractive surface shape.
